# EUROPÄISCHE PATENTSCHRIFT

(11) **EP 0 753 392 B1**
(45) Veröffentlichungstag und Bekanntmachung des Hinweises auf die Patenterteilung: **28.03.2001**
(21) Anmeldenummer: 96111111.9
(22) Anmeldetag: 10.07.1996
(51) Int. Cl.: B29C 47/78, B29C 47/30

(54) **Vorrichtung zum Absperren einer Schmelze insbesondere aus Kunststoff**
Device to shut off a melt stream, especially of plastic
Dispositif de fermeture d'une masse fondue, notamment en matière plastique

(30) Priorität: 13.07.1995 DE 19525540
(43) Veröffentlichungstag der Anmeldung: 15.01.1997
(73) Patentinhaber: RIETER AUTOMATIK GmbH, D-63762 Grossostheim (DE)
(72) Erfinder: Locker, Peter, 63762 Grossostheim (DE)
(74) Vertreter: Bardehle, Heinz, Dipl.-Ing.

(56) Entgegenhaltungen:
- EP-A- 0 286 065
- EP-A- 0 691 192
- DE-C- 4 000 218
- DE-C- 4 305 037
- PATENT ABSTRACTS OF JAPAN vol. 018, no. 383 (M-1640), 19.Juli 1994 & JP-A-06 106599 (MITSUBISHI PLASTICS IND LTD), 19.April 1994,
- PATENT ABSTRACTS OF JAPAN vol. 015, no. 076 (C-0809), 21.Februar 1991 & JP-A-02 301505 (KAWASAKI STEEL CORP), 13.Dezember 1990,

## Beschreibung

Die Erfindung bezieht sich auf eine Vorrichtung zum Absperren einer Schmelze, insbesondere aus Kunststoff, die in einer Schmelzeleitung fließt, auf die ein den Schmelzestrom steuerndes Kühlorgan einwirkt.

Eine derartige Vorrichtung ist in den PATENT ABSTRACTS OF JAPAN, Bd. 018, Nr. 383 (M-1640), 19. Juli 1994 & JP-A-06 106599 (Mitsubishi Plastics Ind. Ltd.), 19. April 1994 beschrieben. Dabei handelt es sich um einen in eine Düsenplatte eingefügten Block mit zwei den Block durchsetzenden Leitungen, in denen entweder ein Kühlmedium oder ein Heizmedium fließen kann. Der Block läßt neben sich einen Durchlaß für die Schmelze frei, die bei ausreichender Kühlung des Blocks abgesperrt und bei Erhitzung des Blocks wieder durchgelassen wird. Nachteilig bei dieser Anordnung ist die Einfügung des Blocks in die Düsenplatte, die wegen dieser Bauweise in erheblichem Umfang mitgekühlt bzw. miterhitzt wird.

Es ist weiterhin aus der europäischen Patentanmeldung EP-A-0 286 065 eine Vorrichtung zum Aufschmelzen und Austragen von Klebstoffen bekannt, bei der eine Wärmeschranke zwischen einem Vorratsbehälter, der den Klebstoff in fester Form enthält, und der Aufschmelzzone für den Klebstoff besteht, durch die ein Entweichen von Wärme in dem Bereich des Vorratsbehälters vermieden wird.

In der europäischen Patentanmeldung EP-A-0 691 192 ist eine Vorrichtung zur Herstellung von Polymeren offenbart, die im Anschluß an einen Behälter einen heizbaren oder kühlbaren Durchlaß aufweist, dessen Temperatur so eingestellt wird, daß der Durchfluß des Polymers gesteuert werden kann.

In der deutschen Patentschrift DE-C-43 05 037 ist eine verschließbare Austragdüse für thermoplastische Kunststoffe hinsichtlich ihrer konstruktiven Einzelheiten dargestellt, wobei jedoch nichts hinsichtlich einer besonderen Kühlung oder Erhitzung der betroffenen Bauteile gesagt ist.

In PATENT ABSTRACTS OF JAPAN, Bd. 015, Nr. 076 (C-0809), 21. Februar 1991 & JP-A-02 301505 (Kawasaki Steel Corp.), 13. Dezember 1990 ist ein Verfahren zur Steuerung des Durchflusses von flüssigem Metall beschrieben, dessen Flüssigkeitszustand mittels Wirbelstrombeeinflussung erzielt wird.

Der Erfindung liegt die Aufgabe zugrunde, eine Vorrichtung zum Absperren einer Schmelze zu schaffen, die ohne mechanische Bauteile strömungsgünstig aufbaubar ist, Dichtungsprobleme vermeidet und mit einem geringen Wärmebzw. Kühlbedarf auskommt.

Erfindungsgemäß geschieht dies dadurch, daß das Kühlorgan aus ein Kühlmittel führenden Kühlleitungen besteht, die mit solchem Abstand voneinander und in derartiger Ausrichtung quer zum Schmelzestrom in demselben verlauten, daß bei Kühlung der Schmelze diese zwischen den Kühlleitungen feste Brücken bildet und die Brücken mit den Kühlleitungen eine den Schmelzestrom vollständig durchquerende Sperrzone formen.

Zweckmäßige Weiterbildungen der Erfindung sind Gegenstand der abhängigen Ansprüche.

Die erfindungsgemäße Vorrichtung nutzt die Eigenschaften einer Schmelze aus, bei Abkühlung unter ihren Schmelzpunkt zu erstarren, um ohne bewegte Bauteile und besondere Dichtungen mit der erstarrten Schmelze selbst die Absperrung des Schmelzflusses zu bewirken. Hierzu werden erfindungsgemäß die quer zum Schmelzstrom verlaufenden Kühlleitungen zusammen mit den sich zwischen den Kühlleitungen bei Erstarren der Schmelze ausbildenden Brücken verwendet, die zusammen mit den Kühlleitungen eine Art quer zum Schmelzestrom verlaufender Absperrplatte bilden, die keinerlei bewegte Teile aufweist und aufgrund der Verbindung der Brücken mit den Kühlleitungen eine sicher abgedichtete Absperrung des Schmelzestromes herbeiführt. Dabei bilden die Kühlleitungen strömungstechnisch praktisch keine Behinderung. Eine unerwünschte Ableitung von Kälte von den Kühlleitungen kann dabei praktisch nicht eintreten, da diese im wesentlichen gänzlich von dem zu beeinflussenden Schmelzestrom umgeben sind.

Um dabei einen von der Schmelzezuführung herrührenden Druck in günstiger Weise standhalten zu können, bildet man zweckmäßig die Kühlleitungen auf der Zuflußseite dachförmig aus, daß die Brücken in Strömungsrichtung sich gegenüber den Kühlleitungen verkeilen. Ein Druck auf die Brücken drückt diese auf die sich keilförmig verringernden Zwischenräume zwischen den Kühlleitungen hinein, womit die Dichtwirkung am Übergang der erstarrten Schmelze zu den Kühlleitungen verstärkt wird.

Die dachförmige Ausbildung der Kühlleitungen kann man auch auf der Abflußseite vorsehen, um im Falle eines Rückstaus die Dichtigkeit der Kühlzone zu erhöhen.

Um nach erfolgtem Absperren der Schmelze den Schmelzfluß wieder zu ermöglichen, verwendet man zweckmäßig die Kühlleitungen als Heizleitungen, indem man diesen Leitungen ein Heizmedium zuführt, das dann den erstarrten Kunststoff aufschmilzt. Dabei ist es natürlich auch möglich, das Heizmedium während des normalen Schmelzeflusses den Kühlleitungen zuzuführen, um hierdurch für einen guten Durchfluß im Bereich der Kühlleitungen zu sorgen.

Ein vorteilhafter Anwendungsfall für die vorstehend erläuterte Vorrichtung mit der Kühlzone ergibt sich dann, wenn es sich darum handelt, einen zu einer Düsenplatte führenden Schmelzestrom abzusperren. In diesem Falle wird die Kühlzone mit den Kühlleitungen unmittelbar vor der Düsenplatte angeordnet, deren Düsen durch einen eigenen Absperrschieber verschließbar sind. Dieser Anwendungsfall ist besonders interessant im Zusammenhang mit kontinuierlich arbeitenden Reaktoren oder diskontinuierlich arbeitenden Autoklaven für die Herstellung von Kunststoffen, bei denen ein schnelles Absperren des Schmelzeflusses erforderlich ist, was durch den eigenen Absperrschieber geschieht. Dabei ergibt sich häufig die Notwendigkeit, die Düsenplatte mit dem Absperrschieber zu reparieren, zu reinigen oder auszuwechseln. Für diesen Fall der Absperrung des Schmelzeflusses vor der Düsenplatte wird dann die Kühlzone mit den Kühlleitungen verwendet, die während der von ihr verursachten Absperrung des Schmelzflusses die entsprechenden Arbeiten an der Düsenplatte ermöglicht.

Es sei in diesem Zusammenhang auf die DE 40 00 218 C1 verwiesen, in der eine Vorrichtung zum Abziehen und Absperren einer Schmelze insbesondere aus Kunststoff offenbart ist, bei der die Schmelze über ein Absperrventil einer Düsenplatte zugeführt wird. Zum Absperren der Schmelze wird das Absperrventil geschlossen. Es ist aber auch möglich, den Schmelzefluß hinter der Düsenplatte abzusperren, und zwar mittels eines die Düsenplatte überdeckenden Deckels, die auf der Seite der Düsenplatte eine Ausnehmung aufweist, in die bei geschlossenem Deckel Schmelzematerial fließt. Durch Kühlung des Deckels wird die in der Ausnehmung befindliche Schmelze eingefroren, wodurch der Deckel mit der eingefrorenen Schmelze die Düsenplatte dichtend abschließt. Das Absperrventil macht es wegen seiner begrenzten räumlichen Ausdehnung erforderlich, daß zwischen ihm und der nachfolgenden Düsenplatte ein den Schmelzestrom auf die Düsenplatte verteilender Gießer vorgesehen ist, durch den sich der Abstand zwischen der Zuleitung zu dem Absperrventil und der Düsenplatte entsprechend vergrößert. Dies ist in vielen Fällen unerwünscht, insbesondere wenn die Vorrichtung an einen Autoklaven zur Herstellung von Kunststoffen angeschlossen ist. In diesem Falle kann das im Gießer befindliche Kunststoffmaterial nur bedingt an dem chemischen Prozeß der Polymerisation teilnehmen, da dieser Prozeß eine ständige innige Durchmischung des Kunststoffmaterials erfordert.

In den Figuren sind Ausführungsbeispiele der Erfindung dargestellt.

Es zeigen:
- Figur 1: einen Schnitt durch eine Schmelzeleitung mit darin enthaltener Kühlzone;
- Figur 2: einen Schnitt längs der Linie II-II aus Figur 1;
- Figur 3: ein an einem Autoklaven angeschlossenes Austragsorgan mit Kühlzone, Düsenplatte und Absperrschieber;
- Figur 4: einen Schnitt längs der Linie IV-IV aus Figur 3;
- Figur 5: den Absperrschieber gemäß Figur 3 in geschlossener Lage.

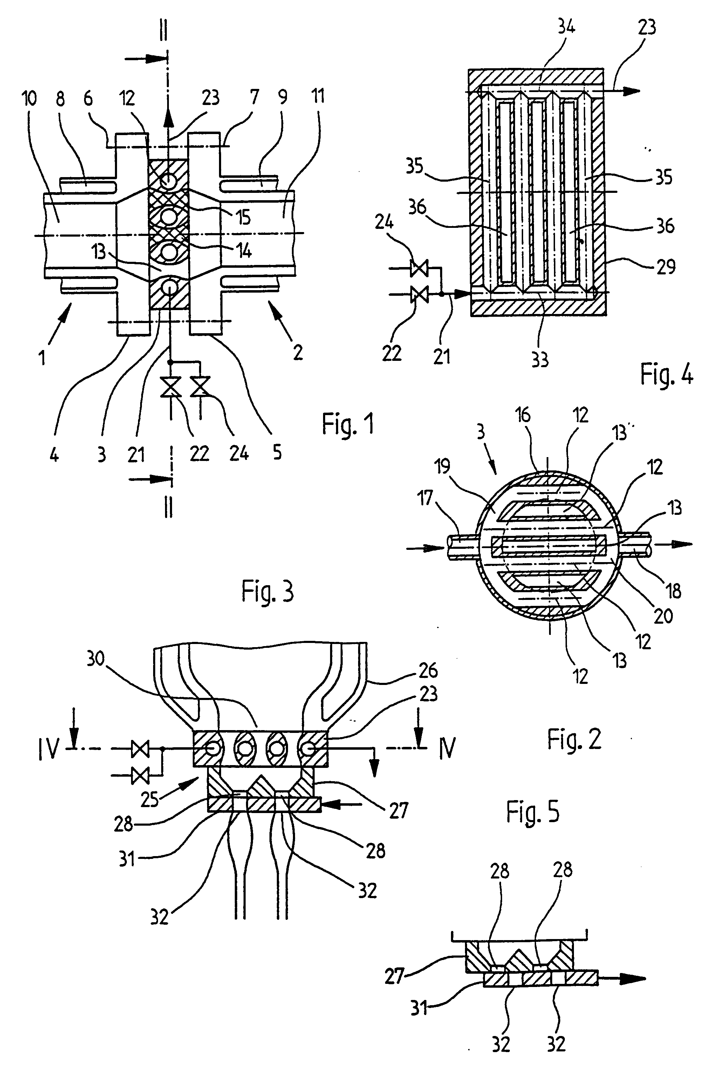

In Figur 1 ist eine Schmelzeleitung mit zwei Rohrstücken 1 und 2 dargestellt, die zwischen sich die Leitungsplatte 3 halten. Die Leitungsplatte 3 ist dabei zwischen den Flanschen 4 und 5 eingespannt, die durch die strichpunktierten Linien 6 und 7 angedeutet sind. Für die Verbindung der beiden Flanschen 4 und 5 kommen insbesondere übliche Schrauben infrage. Die Rohrstücke 1 und 2 sind jeweils von einem Heizkanal 8 bzw. 9 umgeben, in dem ein Heizmedium strömt, um eine durch die Innenräume 10 und 11 der beiden Rohrstücke 1 und 2 strömende Kunststoffschmelze in flüssigem Zustand zu erhalten.

Die Leitungsplatte 3 ist hier mit vier gradlinig senkrecht zur Zeichenebene verlaufenden Kühlleitungen 12 versehen, die von einem Kühlmedium, z.B. Luft oder Öl, durchströmt werden. Die Leitungsplatte 3 ist mit diese quer durchsetzenden Durchflußkanälen versehen, von denen der mit dem Bezugszeichen 13 versehene Durchflußkanal hier zu besseren Darstellung freigelassen ist. Die beiden weiteren in der Leitungsplatte vorgesehenen Durchflußkanäle sind von erstarrter Kunststoffschmelze ausgefüllt, die die Brücken 14 und 15 bilden, durch die die Durchflußkanäle abgesperrt werden. Im Falle des Wirksamwerdens der von der Leitungsplatte 3 gebildeten Kühlzone ist natürlich auch der Durchflußkanal 13 vollständig ausgefüllt (wie bei 14 und 15).

Die Gestaltung der Leitungsplatte 3 ist weiterhin aus Figur 2 ersichtlich, die einen Schnitt längs der Linie II-II aus Figur 1 zeigt. Die Leitungsplatte 3 weist die Wandung 16 auf, die einerseits durch den Einlaufstutzen 17 und andererseits durch den Ablaufstutzen 18 durchbrochen wird. Über die Stutzen 17 und 18 fließt das Kühlmedium zu und ab. Von dem Einlaufstutzen 17 gelangt das Kühlmedium in den Verteilerraum 19, von dort in die Kühlleitungen 12, die in den Sammelraum 20 einmünden. Vom Sammelraum 20 strömt das Kühlmedium dann über den Ablaufstutzen 18 ab. Zwischen den Kühlleitungen 12 verlaufen die Durchflußkanäle 13, die im Falle der Wirkung des die Kühlleitungen durchströmenden Kühlmediums gegebenenfalls durch die in Figur 1 mit den Bezugszeichen 14 und 15 bezeichneten Brükken verschlossen sind.

In der Betriebsphase des Durchflusses von Schmelze kann diese die Leitungsplatte 3 ungehindert durchsetzen, fließt also vom Rohrstück 1 durch die Leitungsplatte 3 zu dem Rohrstück 2. Um den Schmelzefluß abzusperren, wird der Leitungsplatte 3, wie oben bereits gesagt, das Kühlmedium über die prinzipiell dargestellte Zuleitung 21 zugeführt, und zwar über das Ventil 22, mit dem der Kühlmittelzufluß ein- und ausgeschaltet wird. Das Kühlmittel fließt dann durch die Kühlleitungen 12 und gelangt schließlich zu dem Auslauf 23. Unter dem Einfluß der Abkühlung der Leitungsplatte 3 erstarrt die in den Durchflußkanälen 13 fließende Schmelze und bildet dann die bereits oben erwähnten Brücken in sämtlichen Durchflußkanälen, von denen in Figur 1 nur die Brücken 14 und 15 eingezeichnet sind.

Um die so bewirkte Absperrung wieder zu beseitigen, wird über das Ventil 24 der Zuleitung 21 ein Heizmedium, z.B. Öl, zugeführt, das dann, wie zuvor bezüglich des Kühlmittelflusses beschrieben, die Leitungsplatte 3 durchströmt und am Abfluß 23 abströmt. Durch das Heizmedium wird die Leitungsplatte 3 so aufgeheizt, daß die in ihr enthaltenen Brücken aufschmelzen, womit der Durchfluß von Schmelze durch die Leitungsplatte 3 wieder freigegeben ist.

Wie aus Figur 1 ersichtlich, sind die Kühlleitungen 12 ovalartig ausgebildet und nehmen damit auf der Zuflußseite (Rohrstück 1) und der Abflußseite (Rohrstück 2) eine etwa dachförmige Gestalt an. Dies begünstigt einerseits das weitgehend ungehinderte Durchströmen der Schmelze, andererseits ergeben sich damit bei den Brücken 14 und 15 auf der Einlaufseite und der Auslaufseite jeweils eine keilförmige Gestaltung, mit der sich die Brücken 14 und 15 gewissermaßen zwischen den Kühlleitungen 12 verkeilen. Hierdurch wird erreicht, daß insbesondere nach Absperren der Schmelze durch die gebildeten Brücken ein Druck auf die Brücken nicht dazu führen kann, daß diese gewissermaßen zwischen den Kühlleitungen 12 hindurchgleiten. Dies gilt auch für einen möglicherweise auftretenden Rückstau von der Seite des Rohrstücks 2 her.

In der Figur 3 ist ein besonderer Anwendungsfall einer das Absperren von Schmelze bewirkenden Kühlzone gemäß der Erfindung dargestellt, bei dem es sich um die Austragsvorrichtung 25 eines Autoklaven 26, also einem üblichen Bauteil, handelt, so daß hier auf eine diesbezügliche, ins einzelne gehende Darstellung verzichtet werden kann. Die Austragsvorrichtung 25 enthält die Düsenplatte 27, die zwei Reihen von Düsen 28 aufweist. Die Düsenplatte 27 ist über die Leitungsplatte 29 an dem Auslaß 30 des Autoklaven 26 befestigt. Mit der Leitungsplatte 29 kann in der oben dargestellten Weise durch Erstarren der in ihren Durchflußkanälen befindlichen Schmelze bewirkt werden, womit der Zufluß von Schmelze zur Düsenplatte 27 unterbunden wird. Die Düsenplatte 27 ist zusätzlich zum schnellen Absperren des Schmelzeflusses mit dem Absperrschieber 31 versehen, der auf der Oberfläche der Düsenplatte 27 abdichtend hin- und hergeschoben werden kann. Im Falle einer Position des Absperr- oder Plattenschiebers 31 gemäß Figur 3 kann die aus den Düsen 28 austretende Schmelze in fluchtende Löcher 32 des Absperrschiebers ein- und aus diesen auströmen. Bei Verschiebung des Absperrschiebers 31 in die in Figur 5 gezeichnete Lage werden die Düsen 28 dagegen verschlossen, so daß mit dem Verschieben des Absperrschiebers 31 der Schmelzestrom schlagartig gestoppt wird.

Die ein Absperren des Schmelzeflusses ermöglichende Leitungsplatte 29 gestattet es, bei durch sie abgesperrter Schmelze die Düsenplatte 27 mit dem Absperrschieber 31 abzunehmen, gegebenenfalls zu reinigen oder zu reparieren, was damit auch bei gefülltem Autoklaven 26 möglich ist.

In der Figur 4 ist dargestellt, wie die Leitungsplatte 29 an die Gestaltung der Düsenplatte 27 angepasst ist, die, wie gesagt, zwei Reihen von Düsen 28 enthält. Die Leitungsplatte 29 muß sich also über die gesamte Länge der Reihen von Düsen 28 erstrecken. Hierzu ist die Leitungsplatte 29 rechteckig ausgebildet. Sie weist ähnlich der Anordnung gemäß den Figuren 1 und 2 die Zuleitung 21 und den Auslauf 23 auf, wobei in die Zuleitung 21 die Ventile 22 und 24 gelegt sind, deren Wirkung die gleiche ist, wie zu Figur 1 beschrieben. Die Bohrungsplatte 29 enthält für die Führung des Kühl-bzw. Heizmediums den Verteilerraum 33 und den Sammelraum 34. Zwischen Verteilerraum 33 und Sammelraum 34 erstrecken sich die Kühlleitungen 35. Zwischen diesen liegen die Durchflußkanäle 36, die von der Schmelze durchströmt werden und in denen sich gegebenenfalls die oben erwähnten Brücken zum Absperren der Schmelze ausbilden.

## Patentansprüche

1. Vorrichtung zum Absperren einer Schmelze, insbesondere aus Kunststoff, die in einer Schmelzeleitung (1,2) fließt, auf die ein den Schmelzestrom steuerndes Kühlorgan einwirkt, **dadurch gekennzeichnet,** daß das Kühlorgan aus ein Kühlmittel führenden Kühlleitungen (12,35) besteht, die mit solchem Abstand voneinander und in derartiger Ausrichtung quer zum Schmelzestrom in demselben verlaufen, daß bei Kühlung der Schmelze diese zwischen den Kühlleitungen (12,35) feste Brücken (14,15) bildet und die Brücken (14,15) mit den Kühlleitungen (12,35) eine den Schmelzestrom vollständig durchquerende Sperrzone formen.

2. Vorrichtung nach Anspruch 1, **dadurch gekennzeichnet,** daß die Kühlleitungen (12,35) auf der Zuflußseite derart dachförmig ausgebildet sind, daß die Brücken (14,15) in Strömungsrichtung sich gegenüber den Kühlleitungen (12,35) verkeilen.

3. Vorrichtung nach Anspruch 2, **dadurch gekennzeichnet,** daß die Kühlleitungen (12,35) auch auf der Abflußseite dachförmig ausgebildet sind.

4. Vorrichtung nach einem der Ansprüche 1 bis 3, **dadurch gekennzeichnet,** daß den Kühlleitungen (12,35) zur Ermöglichung der Schmelzflusses ein Heizmedium zuführbar ist.

5. Vorrichtung zum Absperren einer einer Düsenplatte (27) zugeführten Schmelze nach einem der Ansprüche 1 bis 4, **dadurch gekennzeichnet,** daß die Kühlzone (29) mit den Kühlleitungen (35) unmittelbar vor der Düsenplatte (27) angeordnet ist, deren Düsen duch einen eigenen Absperrschieber (31) verschließbar sind.

## Claims

1. Device for shutting off a melt, in particular of polymer, which flows in a melt line (1, 2) on which a cooling member which controls the melt stream acts, characterized in that the cooling member comprises cooling lines (12, 35) which conduct a coolant and run at such intervals from one another and in such an alignment transversely with respect to the melt stream in the said melt stream that, on cooling of the melt, the latter forms solid bridges (14, 15) between the cooling lines (12, 35) and the bridges (14, 15) form with the cooling lines (12, 35) a barrier zone crossing completely through the melt stream.

2. Device according to Claim 1, characterized in that the cooling lines (12, 35) are designed on the inflow side in such a roof-shaped manner that the bridges (14, 15) wedge themselves with respect to the cooling lines (12, 35) in the direction of flow.

3. Device according to Claim 2, characterized in that the cooling lines (12, 35) are also designed in a roof-shaped manner on the outflow side.

4. Device according to one of Claims 1 to 3, characterized in that, to make melt flow possible, a heating medium can be fed to the cooling lines (12, 35).

5. Device for shutting off a melt fed to a die plate (27) according to one of Claims 1 to 4, characterized in that the cooling zone (29) with the cooling lines (35) is arranged directly upstream of the die plate (27), the dies of which can be closed by a dedicated shut-off slide valve (31).

## Revendications

1. Dispositif pour bloquer une masse fondue, notamment formée d'une matière plastique, qui circule dans une canalisation (1,2) pour la masse fondue, sur laquelle agit un organe de refroidissement qui commande le courant de la masse fondue, caractérisé en ce que l'organe de refroidissement est constitué par des canalisations de refroidissement (12,35), qui véhiculent un fluide de refroidissement et qui s'étendent à une distance telle les unes des autres et avec un alignement tel transversalement par rapport au courant de la masse fondue, à l'intérieur de cette dernière, que lors du refroidissement de la masse fondue, cette dernière forme des ponts fixes (14,15) entre les canalisations de refroidissement (13,35) et que les ponts (14,15) forment, avec les canalisations de refroidissement (12,35), une zone de blocage qui traverse complètement le courant de masse fondue.

2. Dispositif selon la revendication 1, caractérisé en ce que les canalisations de refroidissement (12,35) sont réalisées avec une forme en toit sur le côté d'amenée de telle sorte que les ponts (14,15) se coincent dans la direction d'écoulement par rapport aux canalisations de refroidissement (12,35).

3. Dispositif selon la revendication 2, caractérisé en ce que les canalisations de refroidissement (12,35) sont également réalisées en forme de toit sur le côté évacuation.

4. Dispositif selon l'une des revendications 1 à 3, caractérisé en ce qu'un fluide de chauffage peut être amené aux canalisations de refroidissement (12,31) de manière à permettre la circulation de la masse fondue.

5. Dispositif pour bloquer une masse fondue envoyée à une plaque à buses (27) selon l'une des revendications 1 à 4, caractérisé en ce que la zone de refroidissement (29) pourvue des canalisations de refroidissement (25) est disposée directement en amont de la plaque à buses (27), dont les buses peuvent être fermées par un tiroir de blocage particulier (31).
